# EUROPÄISCHE PATENTANMELDUNG

(11) **EP 1 202 412 A1**
(43) Veröffentlichungstag der Anmeldung: **02.05.2002**
(21) Anmeldenummer: 00122325.4
(22) Anmeldetag: 23.10.2000
(51) Int. Cl.: H02B 1/052

(54) **Vorrichtung zur Schienenanbringung eines elektrischen Installationsgerätes**

(71) Anmelder: ABL SURSUM BAYERISCHE ELEKTROZUBEHÖR GmbH & Co. KG, D-91207 Lauf (DE)
(72) Erfinder: Poppendörfer, Thomas, 91247 Vorra (DE)
(74) Vertreter: Böhme, Volker, Dipl.-Ing.

(57) **Zusammenfassung**

Es gibt eine Vorrichtung zum Anbringen eines Installationsgerätes 5 an einer Tragschiene 1 und einer Sammelschiene 3, wobei Schiebermittel zwei Griffteile 14 und zwei Schiebstücke 18, 20 umfassen und wobei die Schiebstücke in einer Hintergreifstellung mit Rastnasen 30 Schienensimse 2 der Tragschiene hinterfassen. Dabei ist es erwünscht, wenn eine Bewegung beider Rastnasen relativ zum Gehäuse mittels nur eines Griffteils zu veranlassen ist. Dies ist erreicht mittels Schiebermitteln, bei denen die Schiebstücke zwei durch ein Zugfederelement 19 verbundene Schiebböcke 18, 20 sind, die an einem länglichen Führungsschieber 10 vorgesehen sind, der die Griffteile 14 bildet. Es wird beim Verschieben des Führungsschiebers 10 in eine Löserichtung 31 mittels eines Anschlags der eine Schiebbock 18 in eine Freigabestellung zum Freigeben des zugeordneten Schienensimses 2 mitgenommen; auch wird beim Verschieben des Führungsschiebers in Löserichtung ein gegen das Gehäuse 6 abgestütztes 33 Federstück 26 gespannt, das beim Entspannen den Führungsschieber sowie den anderen Schiebbock 20 entgegen der Löserichtung zurückschiebt, wobei dieser Schiebbock 20 in eine Freigabestellung zum Freigeben des zugeordneten Schienensimses 2 gelangt.

## Beschreibung

Die Erfindung betrifft eine Vorrichtung zur Schienenanbringung eines elektrischen Installationsgerätes, bei der das Installationsgerät ein Gehäuse aufweist und einer mit Schienensimsen versehenen Trageschiene sowie einer elektrischen Sammelschiene zugeordnet ist, bei der die Sammelschiene wahlweise einer von zwei Stirnseiten des Gehäuses zugeordnet ist, bei der an einer der Tragschiene zugeordneten Tragstirnseite des Gehäuses im wesentlichen gerade Schiebermittel an dem Gehäuse hin und her verschiebbar gelagert sind und an beiden Enden jeweils in gerader Fortsetzung ein Griffteil bilden, bei der die Schiebermittel zwei gleich gestaltete Schiebstücke aufweisen, die einander Rastnasen zuwenden, die bei einer Hintergreifstellung der Schiebstücke zum Hintergreifen je eines der Schienensimse vorgesehen sind, bei der jedes Schiebstück hin und her verschiebbar gelagert ist und bei der Hintergreifstellung festgelegt ist und bei der zum Freigeben der Schienensimse beide Schiebstücke relativ zum Gehäuse verschiebbar sind.

Das Installationsgerät wird mittels Füßen an der Tragschiene, die eine Hutschiene ist, festgelegt. Die der Stromführung dienende Sammelschiene wird in eine Gehäuse-Aussparung und eine Klemmeinrichtung eingeschoben und mittels der Klemmeinrichtung elektrisch angeschlossen. Es wird eine Vielzahl von Installationsgeräten in einer Reihe dicht an dicht auf der Tragschiene angebracht und an die Sammelschiene angeschlossen. Es ergibt sich immer wieder die Notwendigkeit, ein einzelnes Installationsgerät aus der Reihe herauszunehmen und wieder einzusetzen. Damit man hierzu nicht die Sammelschiene von sämtlichen Installationsgeräten der Reihe lösen muß und nach dem Wiedereinsetzen wieder mit sämtlichen Installationsgeräten verbinden muß, weist das Installationsgerät eine geeignete Vorrichtung zur Schienenanbringung auf. Es werden die Rastnasen derart zurückgezogen, daß das Installationsgerät auf der Tragschiene derart bewegt werden kann, daß sich das Installationsgerät aus dem Ineinandergriff mit der Sammelschiene löst. Danach läßt sich das einzelne Installationsgerät von der Tragschiene abnehmen, ohne daß die Sammelschiene von den anderen Installationsgeräten der Reihe abgenommen werden muß. Das Wiedereinsetzen der einzelnen Installationsgeräte erfolgt in umgekehrter Weise.

Bei einer bekannten (DE 38 25 647 C2) Vorrichtung der eingangs genannten Art sind als Schiebstücke zwei relativ kurze Kurzschieber unmittelbar am Gehäuse vorgesehen, die jeweils ein zugängliches Griffstück bilden. Es ist das Gehäuse an beiden Sammelschiene-Stirnseiten zur Anordnung der Sammelschiene mit Versatz zu den mit den Griffteilen versehenen Führungsmitteln geeignet ausgebildet, wobei in einem montierten Zustand trotz Bestückung der einen Sammelschiene-Stirnseite mit der Sammelschiene beide Griffteile zugänglich bleiben. Wenn man zum Freigeben der Schienensimse beide Rastnasen relativ zum Gehäuse bewegen will, muß man beide Kurzschieber an den Griffteilen betätigen. Es gibt Fälle, in denen der Bereich, in dem sich das eine Griffteil befindet, verbaut ist, so daß der zugehörige Kurzschieber mit der zugehörigen Rastnase nicht betätigt werden kann. Das Griffteil befindet sich in gerader Fortsetzung der Schiebermittel dicht bei der mit den Schiebermitteln versehenen, der Tragschiene zuzuwendenden Tragstirnseite des Gehäuses. Dies ist dann, wenn zur Einstellung der Freigabestellung beide Rastnasen relativ zum Gehäuse von der Tragschiene wegzuverschieben sind, von Nachteil.

Eine Aufgabe der Erfindung ist es daher, eine Vorrichtung der eingangs genannten Art zu schaffen, bei der die Bewegung beider Rastnasen relativ zum Gehäuse von beiden Sammelschiene-Stirnseiten her mittels nur eines Griffteils zu veranlassen ist. Die erfindungsgemäße Vorrichtung ist, diese Aufgabe lösend, dadurch gekennzeichnet, daß das Gehäuse an beiden Sammelschiene-Stirnseiten zur Anordnung der Sammelschiene in gerader Fortsetzung der mit den Griffteilen versehenen Führungsmittel geeignet ausgebildet ist, wobei in einem montierten Zustand die eine Sammelschiene-Stirnseite mit der Sammelschiene bestückt ist und nur das Griffteil der anderen Sammelschiene Stirnseite zugänglich ist, daß an der Tragstirnseite des Gehäuses ein länglicher, beiden Rastnasen zugeordneter Führungsschieber gelagert ist, der die beiden Griffteile bildet, daß zwei die Rastnasen bildende gleichgestaltete Schiebböcke an dem Führungsschieber hin und her verschiebbar gelagert sind und bei der Hintergreifstellung mit einem Widerlager zu einem freien Anschlag des Führungsschiebers geschoben sind, daß die beiden Schiebböcke über ein Zugfederelement belastet sind, das die beiden Schiebböcke in der Hintergreifstellung an den Anschlägen hält, daß jeweils der dem einen der beiden Griffteile fernliegende Schiebbock einen federnd getragenen Rastnoppen aufweist, hinter den sich auf der Seite dieses Griffteils ein Quersteg des Führungsschiebers legt, wenn der Führungsschieber in eine zu dieser Griffteilseite hin gerichtete Löserichtung verschoben ist, daß beim Verschieben des Führungsschiebers in diese Löserichtung mittels des Anschlags der griffteilseitige Schiebbock in eine Freigabestellung zum Freigeben des zugeordneten Schienensimses mitgenommen wird, daß beim Verschieben des Führungsschiebers in Löserichtung ein gegen das Gehäuse abgestütztes Federstück gespannt wird, das beim Entspannen den Führungsschieber sowie den griffteilfernen Schiebbock entgegen der Löserichtung zurückschiebt, wobei der griffteilferne Schiebbock in eine Freigabestellung zum Freigeben des zugeordneten Schienensimses gelangt, und daß bei einem weiteren Schieben des Führungsschiebers entgegen der Löserichtung der federnd getragene Rastnoppen mittels eines Widerlagers des Gehäuses den griffteilfernen Quersteg freigibt, der den Rastnoppen zu dessen griffteilferner Seite hin passiert.

Die erfindungsgemäße Vorrichtung ist von der Bauweise her einfach, da sie sich auf die im wesentlichen gerade Gestaltung der Schiebermittel beschränkt. Die zu den Schiebermitteln rechtwinkeligen schmalen Stirnseiten des Gehäuses sind im wesentlichen frei von Schiebermitteln. Durch nur eine Bewegung des Führungsschiebers werden beide Rastnasen von der Tragschiene gelöst. Wenn die Freigabestellung erreicht werden soll, wird. an dem jeweils zugänglichen Griffteil in Richtung weg vom Gehäuse, d. h. in Löserichtung mit einer Zugkraft gezogen. Der griffteilnahe Schiebbock geht mit dem Führungsschieber mit, wobei die griffteilnahe Rastnase einen übergroßen Abstand von der Tragschiene bzw. dem zugeordneten Schienensims erhält und das Federstück gespannt wird. Auch bewegt der sich in Löserichtung bewegende Führungsschieber den Quersteg über den federnd nachgebenden Rastnoppen hinweg, der an dem griffteilfernen Schiebbock sitzt, der gegen die Tragschiene gehalten ist. Wird das jeweils zugängliche Griffteil von der Zugkraft freigelassen, dann schiebt das Federstück den Führungsschieber mit dem griffteilnahen Schiebbock etwas zurück entgegen Löserichtung, wonach die griffteilnahe Rastnase aber noch genug freigebenden Abstand von der Tragschiene hat. Die federstück-bewirkte Zurückbewegung des Führungsschiebers bewegt den griffteilfernen Schiebbock weg von der Tragschiene, so daß die griffteilferne Rastnase den zugeordneten Schienensims freigibt. Das Gehäuse läßt sich von der Tragschiene abnehmen und wieder auf die Tragschiene aufsetzen. Werden bei Freigabestellung das jeweils zugängliche Griffteil und der Führungsschieber entgegen Löserichtung zurückgestoßen, dann wird wegen des Zugfederelements die Rastnase des griffteilnahen Schiebbocks in Hintergreifstellung gebracht. Der Quersteg des zurückgestoßenen Führungsschiebers gibt den Rastnoppen und dessen griffteilfernen Schiebbock frei, dessen Rastnase wegen des Zugfederelements in Hintergreifstellung geschoben wird.

Wichtig ist der montierte Zustand von Installationsgerät, Sammelschiene und Trageschiene. Die Sammelschiene ist in einer gemeinsamen Ebene mit der Trageschiene angeordnet, ohne daß die Betätigung der beiden zu bewegenden Rastnasen beeinträchtigt ist. Der Zugriff zu dem jeweils zugänglichen Griffteil und die Betätigung des Führungsschiebers sind durch die Sammelschiene nicht beeinträchtigt.

Die erfindungsgemäße Vorrichtung wird in der Regel vorgesehen bei einer Bauweise von Sammelschiene und Installationsgerät, bei der das Gehäuse eine Aussparung aufweist, der eine Klemmeinrichtung zugeordnet ist, und bei der die Sammelschiene mit einer Fahne bzw. einer Anschlußzunge in die Aussparung und die Klemmeinrichtung ragt. Die Aussparung und die Klemmeinrichtung sind so gestaltet und dimensioniert, daß bei gelöster Klemmeinrichtung die Fahne einen genügend großen Bewegungsraum hat, um das Installationsgerät unter Heben und Kippen von der Tragschiene zu nehmen oder auf die Tragschiene aufzusetzen.

Besonders zweckmäßig und vorteilhaft ist es, wenn jedes der beiden Federstücke ein elastisch biegbarer Federarm ist, der am freien Ende eine Schräge bildet, und der Federarm-Schräge zum Abstützen eine gegenläufige Schräge des Gehäuses zugeordnet ist. Die Schräge ergibt auf einfache Weise den übergroßen Abstand der dem jeweils zugeordneten Griffteil nahen Rastnase von der Tragschiene und die Biegung des Federarms ergibt die zur Beseitigung der Übergröße nötige Federkraft.

Besonders zweckmäßig und vorteilhaft ist es sodann, wenn die federnde Tragung jedes der beiden Rastnoppen ein elastisch biegbarer Federarm ist, der am freien Ende eine Schräge bildet, und der Federarm-Schräge zur Quersteg-Freigabe eine gegenläufige Schräge des Gehäuses zugeordnet ist. Die Schräge ergibt auf einfache Weise das Wegdrücken des Rastnoppens aus dem Bereich des Querstegs und die Biegung des Federarms unter der Einwirkung des Querstegs ermöglicht die Verrastung von Rastnoppen und Quersteg gegeneinander.

Besonders zweckmäßig und vorteilhaft ist es ebenso, wenn die beiden Schiebböcke und das Zugfederelement ein einheitliches Kunststoffteil sind. Dieses gemeinschaftlich spritzgegossene Kunststoffteil bildet das Zugfederelement, das Federstück und die federnde Lagerung und verringert den Montageaufwand beachtlich.

Besonders zweckmäßig und vorteilhaft ist es weiterhin, wenn die Lagerung jedes der beiden Schiebböcke einen am Schiebbock vorgesehenen Führungszapfen aufweist, der in eine am Führungsschieber vorgesehene Führungsnut ragt, deren Ende den Anschlag für die Hintergreifstellung bildet. Die Schiebböcke sind mit den Führungszapfen in den Führungsnuten begrenzt hin und her bewegbar, wobei das Zugfederelement ständig gespannt ist.

Besonders zweckmäßig und vorteilhaft ist es ebenso, wenn der Führungsschieber rahmenförmig mit zwei Längsstreben gestaltet ist, die nach außen hin Längssimse bilden und in Gehäusenuten eingreifen. Auch hier ist auf eine wenig aufwendige Bauweise Wert gelegt.

Besonders zweckmäßig und vorteilhaft ist es auch, wenn das Zugfederelement an dem Führungsschieber verschiebbar festgelegt ist. Dies stabilisiert das Zugfederelement und erleichtert dessen Montage.

In der Zeichnung ist eine bevorzugte Ausführungsform der Erfindung dargestellt und zeigt
- Fig. 1: eine perspektivische Darstellung einer Vorrichtung zur Schienenanbringung eines elektrischen Installationsgerätes, mit einem abgehobenen Installationsgerät,
- Fig. 2: einen Schnitt der Vorrichtung gemäß Fig. 1, mit angebrachtem Installationsgerät,
- Fig. 3: den Schnitt gemäß Fig. 2 bei teilweise freigegebenem Installationsgerät,
- Fig. 4: den Schnitt gemäß Fig. 2 bei vollständig freigegebenem und abgehobenem Installationsgerät,
- Fig. 5: eine perspektivische Außenansicht von Schiebermitteln der Vorrichtung gemäß Fig. 1,
- Fig. 6: eine perspektivische Innenansicht der Schiebermittel gemäß Fig. 5,
- Fig. 7: eine perspektivische Ansicht eines Kunststoffteiles der Schiebermittel gemäß Fig. 5,
- Fig. 8: einen Teilbereich der Darstellung in Fig. 5, in einem gegenüber Fig. 5 vergrößerten Maßstab und
- Fig. 9: eine Darstellung etwa gemäß Fig. 3 unter Weglassung weiterer Bestandteile des Installationsgerätes.

In der folgenden Beschreibung ist auf den einen der beiden möglichen montierten Zustände des Installationsgerätes, der Sammelschiene und der Tragschiene Bezug genommen. Es ist diejenige Stirnseite, die mit der Sammelschiene bestückt ist, als bestückte Seite bezeichnet, und diejenige Stirnseite, an der das Griffteil zugänglich ist, als Zugangsseite bezeichnet. Bei dem zweiten montierten Zustand ist die Sammelschiene an der Stirnseite angeordnet, die gemäß Zeichnung frei von Sammelschiene ist und deren Griffteil zugänglich ist.

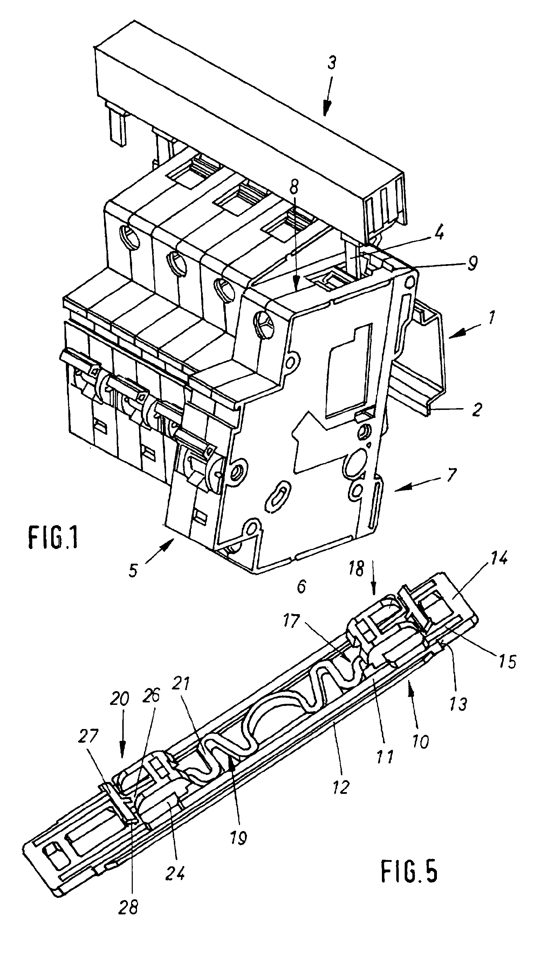

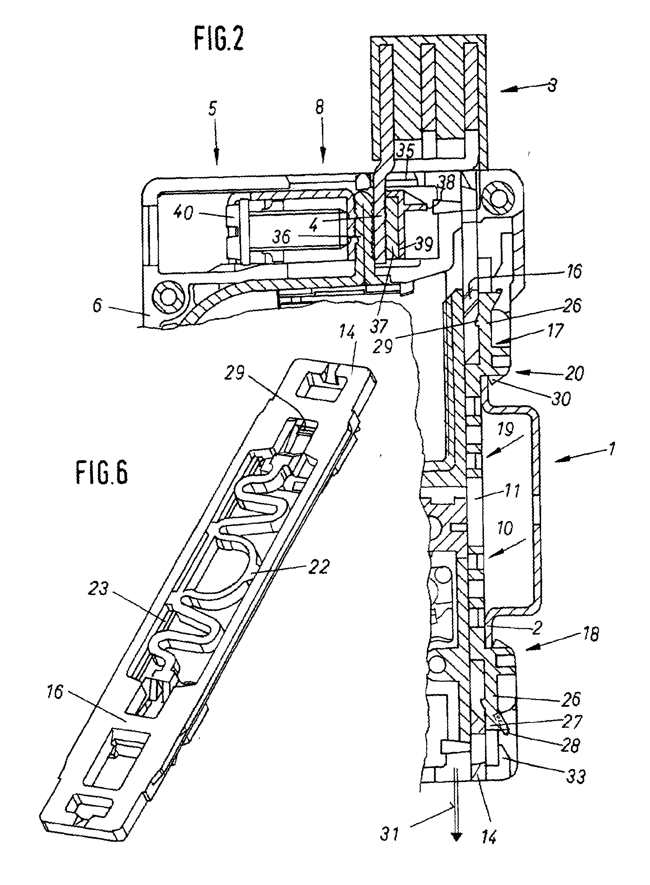

Die Vorrichtung gemäß Zeichnung ist gemäß Fig. 1 und 2 einer Tragschiene 1 zugeordnet, die als Hutschiene gestaltet ist und Schienensimse 2 bildet, die einander entgegengesetzt wegragen. Die Vorrichtung gemäß Zeichnung ist auch gemäß Fig. 1 und 2 einer Sammelschiene 3 zugeordnet, die bei angebrachtem Installationsgerät mit einer Fahne 4 in die Vorrichtung eingreift. Die Vorrichtung gehört zu einem Installationsgerät 5 und gemäß Fig. 1 werden mehrere Installationsgeräte in einer Reihe dicht an dicht an der Tragschiene 1 und der Sammelschiene 3 angebracht. In Fig. 1 sind mehrere Installationsgeräte im angebrachten Zustand gezeigt und ist ein Installationsgerät in einem abgehobenen und gekippten Zustand gezeigt. Das Installationsgerät 5 umfaßt ein Gehäuse 6, das eine Tragstirnseite 7 und zwei Sammelschiene-Stirnseiten 8 bildet, die 7, 8 in etwa rechtwinkelig zueinander verlaufen.

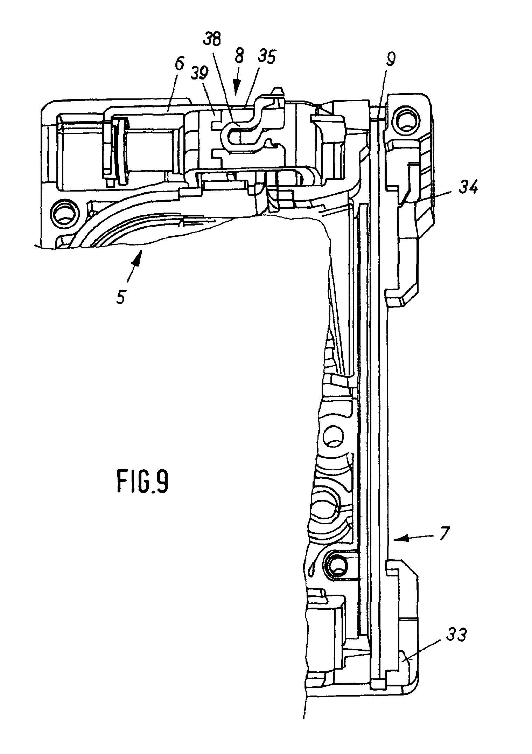

An der Tragstirnseite sind an und in dem Gehäuse 6 Schiebermittel vorgesehen, die dem Anbringen des Installationsgerätes 5 an die Tragschiene 1 und dem Abnehmen des Installationsgerätes von der Tragschiene dienen. Zu den Schiebermitteln gehören ein Paar von Gehäusenuten 9, die in Fig. 1 gezeigt sind und in dem Gehäuse 6 parallel zueinander verlaufen. Zu den Schiebermitteln gehören weiterhin ein z. B. in Fig. 5 gezeigter länglicher Führungsschieber 10, der rahmenartig ausgebildet ist und zwei Längsstreben 11 aufweist, die an der Außenseite jeweils einen Längssims 12 bilden. Der Führungsschieber 10 greift seiner Dicke nach und mit den Längssimsen 12 in die Gehäusenuten 9. Der Führungsschieber 10 weist an den Längsstreben 11 an der Außenseite auch Endanschläge 13 auf, die mit Gehäusegegenanschlägen 42 (siehe Fig. 9) zusammen wirken, um einen bestimmten Verschiebeweg des Führungsschiebers zuzulassen und um ein völliges Herausziehen des Führungsschiebers zu verhindern.

Der Führungsschieber 10 bildet an beiden Enden je ein Griffteil 14, das der einen Sammelschiene-Stirnseite des Gehäuses zugeordnet ist und, wenn es zugänglich ist, das Ansetzen eines Werkzeugs zuläßt. Der Führungsschieber 10 weist bei beiden Enden in den Längsstreben 11 zur Außenseite hin Führungsnuten 15 auf und weist zur bestückten Seite hin einen Quersteg 16 auf, der in Fig. 6 gezeigt ist und im Bereich der zur bestückten Seite hin angeordneten Führungsnuten 15 liegt.

Die Schiebermittel umfassen weiterhin ein einheitliches Kunststoffteil 17, das gemäß Fig. 5 an den Führungsschieber 10 angesetzt ist und in einen zugangsnahen Schiebbock 18, ein Zugfederelement 19 sowie einen zugangsfernen Schiebbock 20 gegliedert ist. Das Zugfederelement 19 weist zur Federung Mäanderbögen 21 auf, ist in dem vom Führungsschieber gebildeten Rahmen angeordnet und greift gemäß Fig. 6 mit Vorsprüngen 22 in Führungsrillen 23 der Längsstreben 11. Das Zugfederelement 19 geht beiderends mittig in den jeweiligen Schiebbock 18, 20 über.

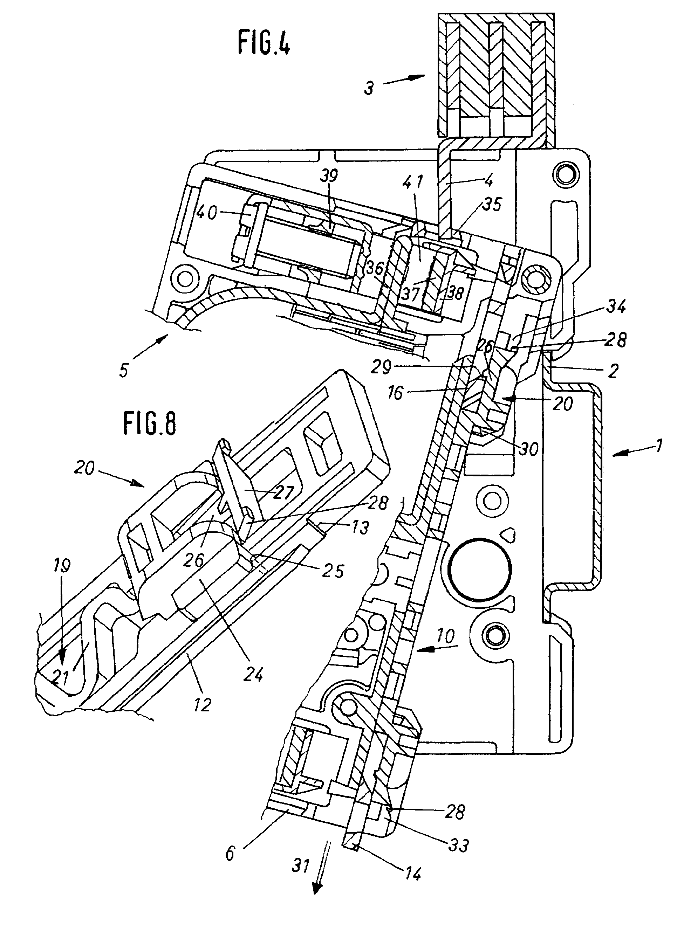

Jeder Schiebbock 18, 20 liegt mit zwei Gleitteilen 24 auf den Längsstreben 11 außenseitig auf und bildet an jedem Gleitteil 24 einen Führungszapfen 25, der in Fig. 8 gezeigt ist und in jeweils eine der Führungsnuten 15 ragt. Die beiden Gleitteile 24 sind Schenkel eines U-Gebildes. Jeder Schiebbock 18, 20 bildet ein Federstück 26, das vom Querstück des U-Gebildes ausgeht und im wesentlichen ein elastisch biegbarer Arm ist. Am freien Ende des Arm-Federstücks 26 ist ein T-Dach 27 vorgesehen, an dessen beiden Enden jeweils ein als Schräge gestaltetes Stützstück 28 vorgesehen ist. Dieses Schräge-Stützstück 28 wirkt mit schrägen Gehäuseabstützungen 33 und 34 zusammen, um den elastisch biegbaren Arm zu biegen bzw. das Federstück 26 zu spannen. Jedes Federstück 26 trägt an der Innenseite einen Rastnoppen 29, der in Fig. 6 und 7 gezeigt ist und jeweils bei dem Schiebbock 18 und 20 dem Quersteg 16 zugewendet ist. Jeder Schiebbock 18, 20 bildet auf der dem Federstück 26 gegenüberliegenden Seite Rastnasen 30, die den Schienensimsen 2 zugewendet sind.

Fig. 2 verdeutlicht die Hintergreifstellung der Schiebböcke 18, 20 und der Rastnasen 30. Die dem Zugfederelement 19 zugewendeten Enden der Führungsnuten 15 bilden freie Anschläge des Führungsschiebers 10 und die Führungszapfen 25 bilden Widerlager der Schiebböcke, die bei der Hintergreifstellung gegen die freien Anschläge gefahren sind. Der Führungsschieber 10 läßt sich aus der Hintergreifstellung in eine durch einen Pfeil 31 angegebene Löserichtung verschieben.

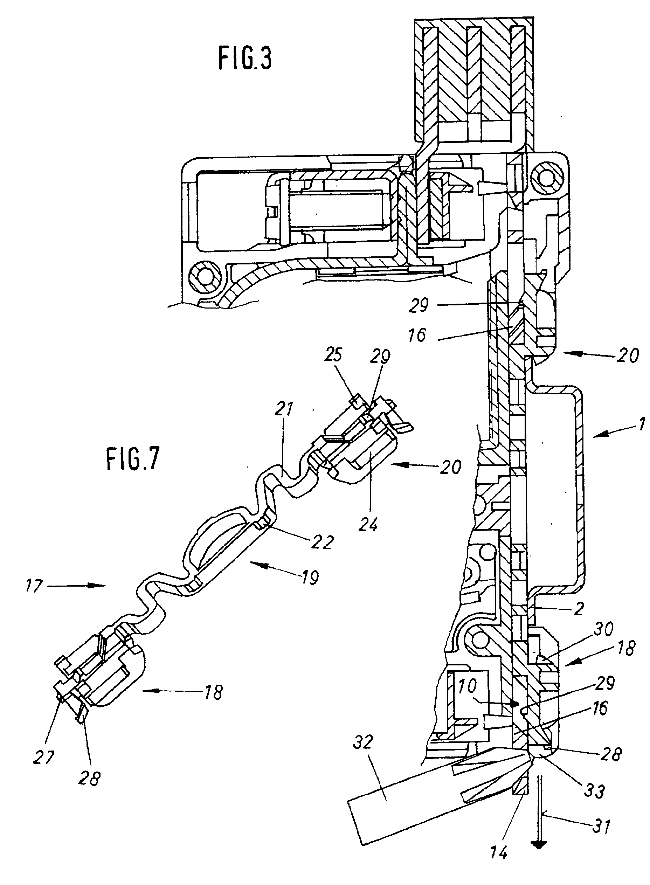

Gemäß Fig. 3 ist mit einem Werkzeug 32 am zugangsseitigen Griffteil 14 des Führungsschiebers 10 angegriffen und dieser um ein Übermaß in Löserichtung 31 verschoben. Dabei hat der Führungsschieber 10 den zugangsnahen Schiebbock 18 mitgenommen 15, 25 und dessen Rastnase 30 von dem zugeordneten Schienensims 2 wegbewegt. Der zugangsferne Schiebbock 20 ist weiterhin an der Tragschiene 1 gehalten und der zugangsferne Quersteg ist von der zugangsfernen Seite des Rastnoppen 29 auf dessen zugangsnahe Seite in Rastposition gelangt. Weiterhin ist bei dem zugangsnahen Schiebbock 18 das schräge Stützstück 28 gegen eine schräge Abstützung 33 des Gehäuses 6 gedrückt.

Gemäß Fig. 4 ist der Führungsschieber 10 von dem Werkzeug 32 freigegeben und - durch 33, 34, 28 - wieder etwas entgegen Löserichtung 31 zurückgefedert. Das Griffteil 14 ragt in Fig. 3 weiter aus dem Gehäuse 6 als in Fig. 4. Das Stützstück 28 hat sich in Fig. 4 - in Löserichtung 31 gesehen - an den Beginn der Schräge der Abstützung 33 zurück bewegt. Der zugangsferne Quersteg 16 hat mittels des Rastnoppens 29 den zugangsfernen Schiebbock 20 entgegen Löserichtung 31 "zurück" geschoben und damit die Rastnase 30 von dem Schienensims 2 entfernt. Das Installationsgerät 5 läßt sich unter Abheben und Kippen von der Tragschiene 1 und der Fahne 4 der Sammelschiene 3 entfernen. Fig. 4 zeigt auch zugangsfern eine am Gehäuse 6 vorgesehene Abstützung 34, die mit einer Schräge versehen ist, die mit dem schrägen Stützstück 28 des zugangsfernen Schiebbocks 20 zusammenwirkt. Wenn der Führungsschieber 10 entgegen Löserichtung 31 gedrückt wird, biegt sich das Federstück 26 von dem Quersteg 16 weg. Es wird der Schiebebock 20 freigegeben, der durch das Zugfederelement 19 in eine Hintergreifstellung der Rastnase 30 am Schienensims 2 gelangt. Die Abstützungen 33, 34 sind so abgestimmt, daß über das Federstück 26 und das Stützstück 28 eine zentrale Stellung des Führungsschiebers erreicht wird.

Gemäß Fig. 2 und 4 ist in das Gehäuse 6 an jeder Sammelschiene-Stirnseite 8 eine Klemmeinrichtung eingebaut, die durch eine Aussparung 35 im Gehäuse für die Fahne 4 der Sammelschiene 3 zugänglich ist. Die Klemmeinrichtung weist ein ortsfestes Kontaktstück 36 auf, das mit einer Mechanik im Inneren des Gehäuses verbunden ist. Weiterhin weist die Klemmeinrichtung ein bewegliches Kontaktstück 37 auf, das über Federmittel 38 (siehe Fig. 9) federnd nachgiebig abgestützt ist und von einem Zugbügel 39 gebildet ist, der mittels einer Schraube 40 bei deren Anziehen gegen die Fahne 4 bzw. gegen das ortsfeste Kontaktstück 36 gezogen wird. Bei geöffneter Klemmeinrichtung gemäß Fig. 4 ist für die Fahne 4 ein Bewegungsraum 41 gegeben, der sich aufgrund der Nachgiebigkeit der Federmittel 38 noch vergrößern läßt.

## Patentansprüche

1. Vorrichtung zur Schienenanbringung eines elektrischen Installationsgerätes,
bei der das Installationsgerät (5) ein Gehäuse (6) aufweist und einer mit Schienensimsen (2) versehenen Trageschiene (1) sowie einer elektrischen Sammelschiene (3) zugeordnet ist,
bei der die Sammelschiene wahlweise einer von zwei Stirnseiten des Gehäuses (6) zugeordnet ist,
bei der an einer der Tragschiene zugeordneten Tragstirnseite (7) des Gehäuses im wesentlichen gerade Schiebermittel an dem Gehäuse hin und her verschiebbar gelagert sind und an beiden Enden jeweils in gerader Fortsetzung ein Griffteil (14) bilden,
bei der die Schiebermittel zwei gleich gestaltete Schiebstücke (18, 20) aufweisen, die einander Rastnasen (30) zuwenden, die bei einer Hintergreifstellung der Schiebstücke zum Hintergreifen je eines der Schienensimse (2) vorgesehen sind,
bei der jedes Schiebstück (18, 20) hin und her verschiebbar gelagert ist und bei der Hintergreifstellung festgelegt ist und
bei der zum Freigeben der Schienensimse beide Schiebstücke relativ zum Gehäuse (6) verschiebbar sind,
**dadurch gekennzeichnet,**
**daß** das Gehäuse (6) an beiden Sammelschiene-Stirnseiten (8) zur Anordnung der Sammelschiene (3) in gerader Fortsetzung der mit den Griffteilen (14) versehenen Führungsmittel (10) geeignet ausgebildet ist,
wobei in einem montierten Zustand die eine Sammelschiene-Stirnseite mit der Sammelschiene bestückt ist und das Griffteil der anderen Sammelschiene-Stirnseite zugänglich ist,
**daß** an der Tragstirnseite (7) des Gehäuses (6) ein länglicher, beiden Rastnasen (30) zugeordneter Führungsschieber (10) gelagert ist, der die beiden Griffteile (14) bildet,
**daß** zwei die Rastnasen bildende gleich gestaltete Schiebböcke (18, 20) an dem Führungsschieber hin und her verschiebbar gelagert (15, 25) sind und bei der Hintergreifstellung mit einem Widerlager zu einem freien Anschlag des Führungsschiebers geschoben sind,
**daß** die beiden Schiebböcke (18, 20) über ein Zugfederelement (19) belastet sind, das die beiden Schiebböcke in der Hintergreifstellung an den Anschlägen hält,
**daß** jeweils einem der Griffteile (14) fernliegende Schiebbock (20) einen federnd getragenen Rastnoppen (29) aufweist, hinter den sich auf der Seite dieses Griffteils ein Quersteg (16) des Führungsschiebers legt, wenn der Führungsschieber in einer zu dieser Griffteilseite hin gerichteten Löserichtung (31) verschoben ist,
**daß** beim Verschieben des Führungsschiebers (10) in diese Löserichtung (31) mittels des Anschlags der griffteilseitige Schiebbock (18) in eine Freigabestellung zum Freigeben des zugeordneten Schienensimses (2) mitgenommen wird,
**daß** beim Verschieben des Führungsschiebers in Löserichtung ein gegen das Gehäuse (6) abgestütztes (33) Federstück (26) gespannt wird, das beim Entspannen den Führungsschieber sowie den griffteilfernen Schiebbock (18) entgegen der Löserichtung zurückschiebt, wobei der griffteilferne Schiebbock (18) in eine Freigabestellung zum Freigeben des zugeordneten Schienensimses (2) gelangt und
**daß** bei einem weiteren Schieben des Führungsschiebers (10) entgegen der Löserichtung (31) der federnd getragene Rastnoppen (29) mittels eines Widerlagers (34) des Gehäuses (6) den griffteilfernen Quersteg (16) freigibt, der den Rastnoppen zu dessen griffteilferner Seite hin passiert.

2. Vorrichtung an Anspruch 1, **dadurch gekennzeichnet, daß** jedes der beiden Federstücke (26) ein elastisch biegbarer Federarm ist, der am freien Ende eine Schräge (28) bildet, und der Federarm-Schräge zum Abstützen eine gegenläufige Schräge (33) des Gehäuses (6) zugeordnet ist.

3. Vorrichtung nach Anspruch 1 oder 2, **dadurch gekennzeichnet, daß** die federnde Tragung (26) jedes der beiden Rastnoppen (29) ein elastisch biegbarer Federarm ist, der am freien Ende eine Schräge (28) bildet, und der Federarm-Schräge zur Quersteg-Freigabe eine gegenläufige Schräge (34) des Gehäuses (6) zugeordnet ist.

4. Vorrichtung nach Anspruch 1, 2 oder 3, **dadurch gekennzeichnet, daß** die beiden Schiebböcke (18, 20) und das Zugfederelement (19) ein einheitliches Kunststoffteil (17) sind.

5. Vorrichtung nach einem der vorhergehenden Ansprüche, **dadurch gekennzeichnet, daß** die Lagerung jedes der beiden Schiebböcke (18, 20) einen am Schiebbock vorgesehenen Führungszapfen (25) aufweist, der in eine am Führungsschieber (10) vorgesehene Führungsnut (15) ragt, deren Ende den Anschlag für die Hintergreifstellung bildet.

6. Vorrichtung nach einem der vorhergehenden Ansprüche, **dadurch gekennzeichnet, daß** der Führungsschieber (10) rahmenförmig mit zwei Längsstreben (11) gestaltet ist, die nach außen hin Längssimse (12) bilden und in Gehäusenuten (9) eingreifen.

7. Vorrichtung nach einem der vorhergehenden Ansprüche, **dadurch gekennzeichnet, daß** das Zugfederelement (19) an den Führungsschieber (10) verschiebbar festgelegt (22, 23) ist.

8. Vorrichtung nach einem der Ansprüche 7 bis 10, **dadurch gekennzeichnet, daß** die Schiebermittel den länglichen Führungsschieber (10) und das einheitliche Kunststoffteil (17) als zu montierende Bauteile sowie am Gehäuse (6) die Gehäusenut (9) und die beiden Widerlager (33, 34) aufweisen.
